# FASCICULE DE BREVET EUROPEEN

(11) **EP 2 633 791 B1**
(45) Date de publication et mention de la délivrance du brevet: **31.12.2014**
(21) Numéro de dépôt: 13153737.5
(22) Date de dépôt: 01.02.2013
(51) Int. Cl.: A47J 43/07, A47J 43/08, A47J 43/042, A47J 43/044

(54) **Appareil ménager pour émulsionner un liquide alimentaire**
Haushaltsgerät zum Emulgieren eines flüssigen Lebensmittels
Household appliance for emulsifying a food liquid

(30) Priorité: 28.02.2012 FR 1251804
(43) Date de publication de la demande: 04.09.2013
(73) Titulaire: SEB S.A., 69130 Ecully (FR)
(72) Inventeur: Turpin, Romain, 14210 Sainte Honorine du Fay (FR); Knidler, Jacques, 72610 Bourg le Roi (FR)
(74) Mandataire: Bourrières, Patrice

(56) Documents cités:
- EP-A1- 2 394 548
- EP-B1- 1 725 124
- WO-A1-2011/151258

## Description

La présente invention concerne le domaine technique des appareils ménagers utilisés pour émulsionner des liquides alimentaires tels que par exemple les appareils managers utilisés pour émulsionner des boissons chaudes ou froides à base de lait appelés « mousseurs » à lait

Un brevet EP 1 725 124 a proposé un appareil ménager pour emulsionner avec de l'air un liquide alimentaire. Cet appareil comprend un récipient amovible équipé d'un couvercle pourvu un outil rotatif qui plonge dans le récipient pour émulsionner le liquide et qui est solidaire une tête d'accouplement mécanique, accessible au niveau du couvercle, pour l'entraînement en rotation de l'outil. L'appareil ménager comprend aussi un châssis supportant un moteur électrique associé à une tête d'entrainement qui est mobile, en rotation d'axe horizontal, entre une position de repos et une position de travail et qui comprend un pied d'accouplement mécanique adapté pour coopérer, en position de travail, avec la tête d'accouplement mécanique de manière que le contact mécanique entre la tête et le pied d'accouplement entraine l'outil en rotation.

Un tel appareil donne pleinement satisfaction en ce qui concerne sa fonction d'émulsification ou de moussage du lait, mais possède l'inconvénient de présenter un mouvement de la tête d'entraînement qui induit un encombrement relativement important et qui présente des risques de pincement d'un utilisateur. Par ailleurs, la présence du pied d'accouplement accessible au niveau de la tête d'entraînement présente un risque de blessure d'un utilisateur en cas de mise en marche du moteur alors que la tête d'entrainement est relevée.

Afin de remédier au problème des risques de blessure des utilisateurs par la rotation des moyens d'accouplement, une demande DE19645564 a proposé la mise en oeuvre d'un accouplement magnétique dont les pièces mobiles sont enfermées dans des carters et ne sont donc pas accessibles aux utilisateurs. Selon ce document, la tête d'entrainement est fixe et le récipient muni de son couvercle est glissé sous la tête d'entrainement de manière à placer en regard les moyens d'accouplement magnétique. Un tel système permet effectivement d'assurer un entraînement de l'outil rotatif sans pièce mobile apparente mais présente l'inconvénient d'enduire des vibrations et donc du bruit en cas de mauvais positionnement relatif des éléments constitutifs de l'accouplement magnétique. De plus, ce système impose de mettre en oeuvre des aimants permanent relativement puissants pour permettre un couplage magnétique malgré l'espace séparant la tête d'accouplement du couvercle et le pied d'accouplement de la tête d'entrainement, cet espace étant nécessaire pour permettre la mise en place et le retrait du récipient. Or, cette puissance des aimants induit un risque de soulèvement du couvercle lors de la mise en place du récipient sous la tête d'entrainement.

Il est donc apparu le besoin d'un appareil ménager pour émulsionner un liquide alimentaire dont la conception permette d'une réduction de son encombrement ainsi que des bruits en fonctionnement et limite les risques de soulèvement du couvercle et de blessure d'un utilisateur.

Afin d'atteindre cet objectif l'invention concerne un appareil ménager pour émulsionner un liquide alimentaire comprenant :
- un récipient amovible équipé d'un couvercle comprenant un outil rotatif plongeant dans le récipient pour émulsionner le liquide et une tête d'accouplement pour l'entraînement en rotation de l'outil,
- un châssis supportant un moteur électrique associé à une tête d'entrainement qui est mobile entre une position de repos et une position de travail et qui comprend un pied d'accouplement adapté pour coopérer, en position de travail, avec la tête d'accouplement de manière à entrainer en rotation l'outil rotatif,

Selon l'invention, la tête d'entraînement est mobile en translation verticale entre la position de repos et la position de travail au dessus d'une zone de réception du récipient amovible tandis que la transmission à l'outil du mouvement de rotation du moteur se fait par couplage magnétique au niveau de la tête et du pied d'accouplement.

La mise en oeuvre du mouvement de translation vertical de la tête d'entraînement permet de limiter l'encombrement total de l'appareil ménager et de limiter les risques de blessures d'un utilisateur. La mise en oeuvre du couplage magnétique permet d'éviter un contact direct entre les parties en mouvement de sorte que cela empêche la transmission d'efforts qui pourraient être liés à un mauvais alignement des moyens d'accouplement. De plus, la mise en oeuvre de moyens d'accouplement magnétique permet d'enfermer les moyens d'accouplement dans la tête d'entraînement de sorte qu'il n'est pas possible de rentrer en contact direct avec ces derniers notamment lorsqu'ils sont entraînés en rotation par le moteur électrique. Ainsi, il n'est pas nécessaire de mettre en oeuvre des moyens de sécurité particuliers pour éviter une mise en route du moteur électrique alors que les moyens d'accouplement ne sont pas parfaitement accouplés. De plus, la possibilité d'enfermer complètement le moteur électrique offerte par les moyens d'accouplement magnétique, permet d'éviter les risques de contamination des produits alimentaires par les particules qui s'échapperaient du moteur en rotation. Par ailleurs, le mouvement de translation de la tête d'entrainement permet de placer le pied d'accouplement au plus près de la tête d'accouplement de sorte qu'il n'est pas nécessaire de surdimensionner les aimants utilisés.

Selon une forme de réalisation de l'invention, l'appareil ménager comprend des moyens de centrage de la tête d'accouplement par rapport au pied d'accouplement.

Un tel centrage permet d'éviter un mauvais alignement de la tête et du pied d'accouplement qui aurait été à l'origine de vibrations et de bruit de fonctionnement important.

Selon une variante de cette forme de réalisation :
- le pied d'accouplement comprend, en tant que moyen de centrage, un manchon borgne à l'intérieur duquel est logé un arbre qui est entrainé par le moteur et qui porte des moyens de couplage magnétique comprenant au moins un aimant permanent,
- la tête d'accouplement comprend, une cuvette de réception du manchon, qui forme un moyen de centrage, qui est solidaire de l'outil rotatif et qui porte à l'extérieur de la cuvette des moyens de couplage magnétique comprenant au moins deux aimants satellites permanents diamétralement opposés par rapport à la cuvette.

La mise en oeuvre d'un manchon borgne qui vient s'engager dans la cuvette de réception dans une relation de type mâle femelle, permet d'assurer un parfait alignement des moyens d'accouplement magnétique de manière à limiter les risques de décrochage. De plus, le manchon borgne peut assurer une fonction de guidage en rotation de la tête d'accouplement et/ou de l'outil rotatif.

Selon une caractéristique de l'invention, les aimants permanents possèdent une direction nord-sud sensiblement horizontale de sorte que le couplage magnétique se fait selon une direction principale horizontale. Une telle disposition permet de limiter l'encombrement global des moyens d'accouplement magnétique.

Selon une autre caractéristique de l'invention, les moyens d'accouplement magnétique comprennent des moyens de couplage dans le pied d'entrainement et dans la tête d'entrainement comprenant des aimants permanents disposés pour que la direction principale de couplage soit sensiblement verticale.

Selon encore une autre caractéristique de l'invention, le couvercle comprend, en tant que moyens de centrage, une collerette qui entoure la tête d'accouplement et qui est destinée à recevoir une partie inférieure de la tête d'entraînement.

Selon une caractéristique de l'invention, le moteur est situé dans la tête d'entraînement et se déplace avec elle. Un tel mode de réalisation permet de simplifier la mécanique de transmission du mouvement du moteur ce qui contribue à fiabiliser l'appareil selon l'invention.

Selon une forme de réalisation de l'invention, l'appareil ménager comprend des moyens de manoeuvre de la tête d'entrainement entre ses positions de repos et de travail qui comprennent un système à rampe hélicoïdale d'axe vertical. Un tel mode de réalisation des moyens de manoeuvre permet d'en simplifier la cinématique et de contrôler les efforts appliqués à la tête d'entraînement.

Selon une variante de cette forme de réalisation, les moyens de manoeuvre comprennent une molette de manoeuvre située sur le dessus du châssis.

Selon une caractéristique de l'invention, la tête d'entraînement se déplace en partie au moins à l'intérieur du châssis. Cette caractéristique limite la possibilité d'accès de l'utilisateur à la tête d'entraînement lorsqu'elle se déplace évitant ainsi les risques de blessures.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description annexée effectuée en référence aux dessins qui illustrent des formes non limitatives de réalisation d'un appareil ménager, selon l'invention, pour émulsionner un liquide alimentaire.
- La figure 1 est une perspective schématique d'un appareil pour émulsionner un liquide alimentaire selon l'invention.
- La figure 2 est une coupe axiale partielle selon l'axe Δ, de l'appareil ménager illustré à la figure 1.
- La figure 3 est une perspective partiellement arrachée montrant un détail de fabrication d'une tête d'entraînement constitutif de l'appareil illustré aux figures 1 et 2.
- La figure 4 est une perspective en vue de dessus du couvercle adapté sur le récipient amovible constitutif de l'appareil ménager illustré aux figures 1 et 2.
- La figure 5 est une coupe axiale analogue à la figure 2 montrant une autre forme de réalisation d'un appareil ménager pour émulsionner un liquide alimentaire selon l'invention.
Il est à noter que sur ces figures les éléments structurels et/ou fonctionnels communs aux différentes variantes peuvent présenter les mêmes références.

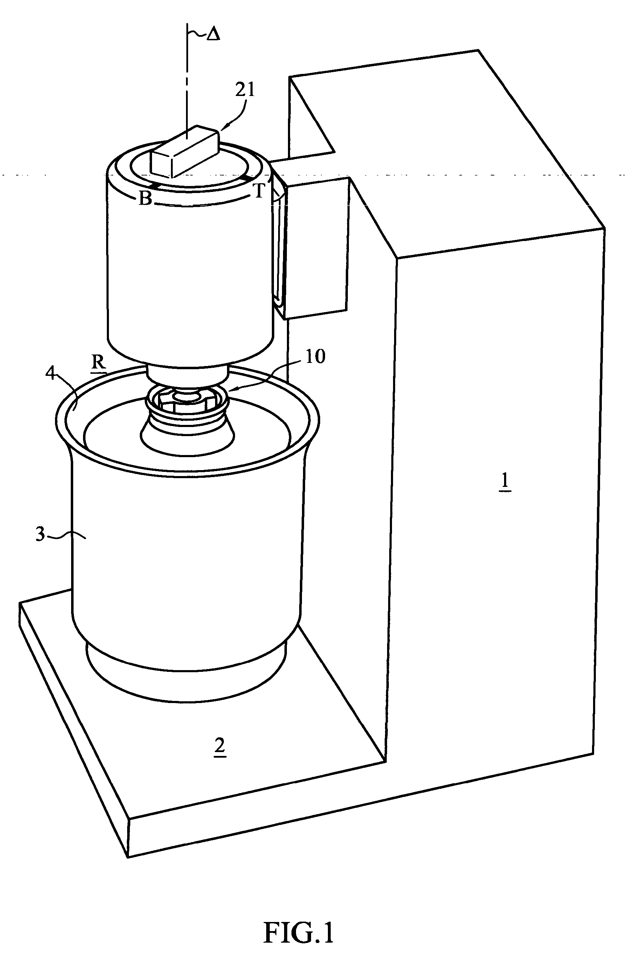

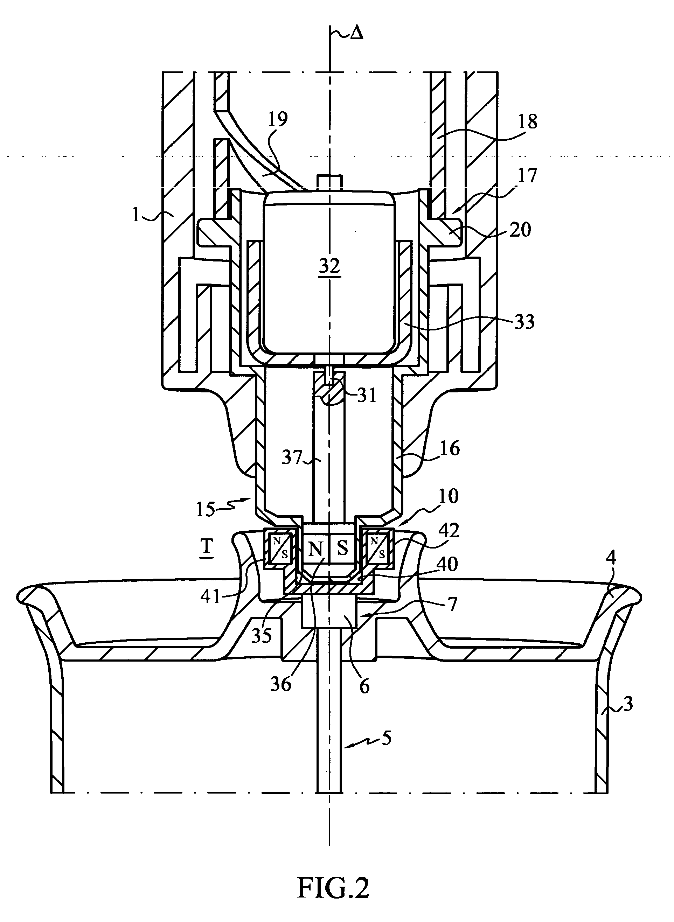

Comme le montre la figure 1, un appareil ménager, selon l'invention, pour émulsionner un liquide alimentaire tel que du lait comprend un châssis 1 qui comporte une zone de réception 2 d'un récipient amovible 3 dans lequel le liquide alimentaire est émulsionné. Le récipient 3 comprend un couvercle 4 adapté de manière amovible sur le col du récipient 3. Le couvercle 4 porte un outil 5 allongé qui plonge l'intérieur du récipient 3 comme cela ressort de la figure 2. L'outil 5 est lié, au niveau d'une extrémité proximale 6, au couvercle 4 par des moyens de guidage en rotation 7 coaxial à l'axe longitudinal Δ de l'outil 5. Les moyens de guidage en rotation 7 peuvent être réalisés de toute manière appropriée, telle que sous la forme d'un palier lisse en matériau à faible coefficient de friction ou encore sous la forme d'un palier à rouleaux. L'outil 5 comprend, par ailleurs, au niveau de son extrémité distale un organe d'émulsification non visible aux figures.

Afin de permettre une mise en rotation de l'outil 5, l'extrémité proximale 6 de ce dernier est solidaire d'une tête d'accouplement 10 située au niveau d'une face supérieure du couvercle 4.

Par ailleurs, le châssis 1 de l'appareil ménager selon l'invention supporte une tête d'entraînement 15 qui est mobile en translation verticale entre une position de repos R, telle qu'illustrée à la figure 1, et une position de travail T représentée à la figure 2.

Selon l'exemple illustré, la tête d'entraînement 15 comprend un corps creux 16 qui se déplace à l'intérieur du châssis 1 de manière, notamment, à se trouver sensiblement complètement à l'intérieur du châssis en position de repos R. Le déplacement de la tête d'entraînement 15 est assuré par des moyens de manoeuvre 17 qui comprennent un fourreau tubulaire 18 qui entoure en partie au moins le corps creux 16 en étant situé entre ce dernier et le châssis 1. Le fourreau 16 présente une forme sensiblement cylindrique de révolution d'axe Δ et se trouve mobile en rotation sur lui-même, selon l'axe Δ, à l'intérieur du châssis 1. Le fourreau 18 comprend deux rampes hélicoïdales 19 dont une seule est visible à la figure 2. Chaque rampe hélicoïdale 19 coopère avec un ergot 20 s'étendant radicalement à l'extérieur du corps creux 16. Le fourreau 18 est, en outre, solidaire d'une molette de manoeuvre 21 située sur le dessus du châssis. La molette de manoeuvre 21 est mobile en rotation d'axe Δ entre une première position identifiée par le symbole R et une deuxième position identifiée par le symbole T. Lorsque la molette est dans sa première position R, la tête d'entraînement 15 est en position de repos R. La rotation de la molette 21, de sa première position R à sa deuxième position T, entraîne une descente de la tête d'entraînement 5 jusqu'à sa position de travail T, et inversement.

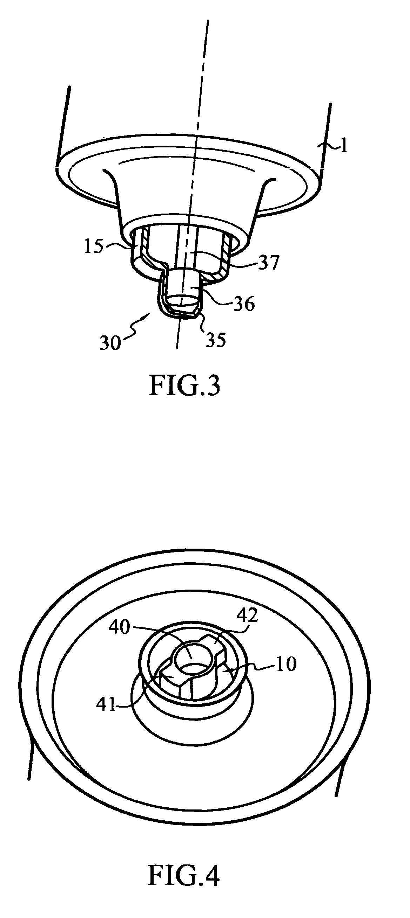

La tête d'entraînement 15 comprend, au niveau de sa partie inférieure, un pied d'accouplement 30, visible à la figure 3. Le pied d'accouplement 30 est destiné à coopérer avec la tête d'accouplement 10 pour transmettre, à l'outil 5, la rotation de l'arbre 31 d'un moteur électrique 32 situé à l'intérieur de la tête d'entraînement 15.

Le moteur électrique 32 est maintenu dans la tête d'entraînement 15 par un berceau 33 qui est solidaire du corps 16. Ainsi, le moteur 32 suit les déplacements de la tête d'entraînement 15.

Selon l'invention, la transmission à l'outil 5, de la rotation de l'arbre 31 du moteur électrique 32, se fait par couplage magnétique au niveau de la tête d'accouplement 10 et du pied 30 d'accouplement.

À cet effet, le pied d'accouplement 30 comprend un manchon borgne 35 de forme sensiblement cylindrique de révolution d'axe Δ qui s'étend vers le bas en saillie de la tête d'entraînement 15. Le manchon borgne 35 contient des moyens de couplage magnétique 36 qui sont liés rigidement à un arbre 37 coaxial à l'axe Δ et lié à l'arbre 31 du moteur 32 de sorte qu'il est entraîné en rotation par ce dernier. Selon l'exemple illustré, les moyens de couplage magnétique 36 comprennent un aimant permanent dont l'axe nord-sud est sensiblement perpendiculaire à l'axe Δ.

La tête d'accouplement 10 comprend, quant à elle, une cuvette 40 de réception du manchon borgne 35. La cuvette 40 possède une forme sensiblement cylindrique de révolution complémentaire de celle du manchon 35. La tête d'accouplement 10 comprend, également, à l'extérieur de la cuvette 40 des moyens de couplage magnétique 41, 42 diamétralement opposés. Selon l'exemple illustré, les moyens de couplage magnétique sont formés par deux aimants permanents 41, 42 dont la direction nord-sud est également sensiblement perpendiculaire à l'axe Δ. Les aimants 41,42 sont disposés de manière que la face sud de l'un soit disposée en regard de la face nord de l'autre comme le montre la figure 2.

L'appareil ménager selon l'invention ainsi constitué est mise en oeuvre de la manière suivante.

Tout d'abord, le récipient amovible 3 est rempli de liquide alimentaire à émulsionner. Ensuite, le récipient 3 est fermé au moyen de son couvercle 4 de manière que l'outil rotatif 5 plonge à l'intérieur du liquide.

Le récipient 3 ainsi fermé est alors placé dans la zone de réception 2 de manière que le centre du couvercle 4, au niveau duquel la tête d'accouplement 10 est accessible, soit sensiblement aligné avec la tête d'entraînement 15 qui est en position de repos. Afin de faciliter cet alignement, la zone de réception 2 peut comprendre des conformations de centrage, non visibles aux figures, destinées à guider et recevoir le fond du récipient 3.

Une fois ledit récipient 3 convenablement disposé, la molette 21 est tournée de manière à faire descendre la tête d'entraînement 15 vers sa position de travail T. Lors de ce mouvement de descente, le manchon 35 vient s'engager dans la cuvette 40. Afin de faciliter cet engagement, le bord inférieur du manchon 35 est chanfreiné, comme cela ressort de la figure 3. Une fois que la tête d'entraînement 15 a atteint sa position de travail T, le pied d'accouplement 30 est en situation de coopération avec la tête d'accouplement 10, le manchon 35 étant complètement engagé dans la cuvette 40. Il apparait que le manchon 35 et la cuvette 40 forment des moyens de centrage de la tête d'accouplement 10 par rapport au pied d'accouplement 30.

Compte tenu des forces d'attraction magnétique, les moyens de couplage 36, 41 et 42 viennent alors se placer dans la position, telle qu'illustrée à la figure 2, dans laquelle la face sud de l'aimant 41 est située en regard de la face nord de l'élément 36 tandis que la face nord de l'aimant 42 est située en regard de la face sud de l'aimant 36. Cette position relative des aimants permet de réaliser un couplage magnétique selon une direction principale de couplage sensiblement perpendiculaire à l'axe Δ et donc ici sensiblement horizontale. Dans cet état, le couplage magnétique permet de transmettre la rotation du moteur électrique 32 à l'outil 5.

L'utilisateur de l'appareil ménager selon l'invention peut alors commander la mise en marche moteur 32 au moyen d'un organe de commande tel qu'un interrupteur non représenté. La rotation du moteur 32 assure alors grâce au couplage magnétique la rotation de l'outil 5 pendant le temps nécessaire à une émulsification satisfaisante du liquide contenu dans le récipient 3.

La mise en oeuvre du système d'entraînement par couplage magnétique évite une transmission des vibrations du moteur directement à l'outil 5 ce qui permet de réduire les bruits de fonctionnement. De même, le centrage relatif des moyens de couplage magnétique 36, 41, 42, assuré par l'engagement du manchon 35 dans la cuvette 40 permet aussi de réduire les bruit de fonctionnement. De plus, le fait que les moyens de couplage 35 soient enfermés dans le manchon borgne 30 permet d'éviter tout risque de blessures en cas de mise en marche accidentelle du moteur électrique en l'absence du récipient 3. Ainsi, il n'est pas nécessaire de prévoir des dispositifs de détection de la présence du récipient 3. Par ailleurs, le fait que le pied d'accouplement 30 vient en appui sur la tête d'accouplement 10 contribue à maintenir le couvercle 4 en position sur le récipient 3 pendant l'émulsification de son contenu et évite les risques de soulèvement du couvercle et/ou du récipient.

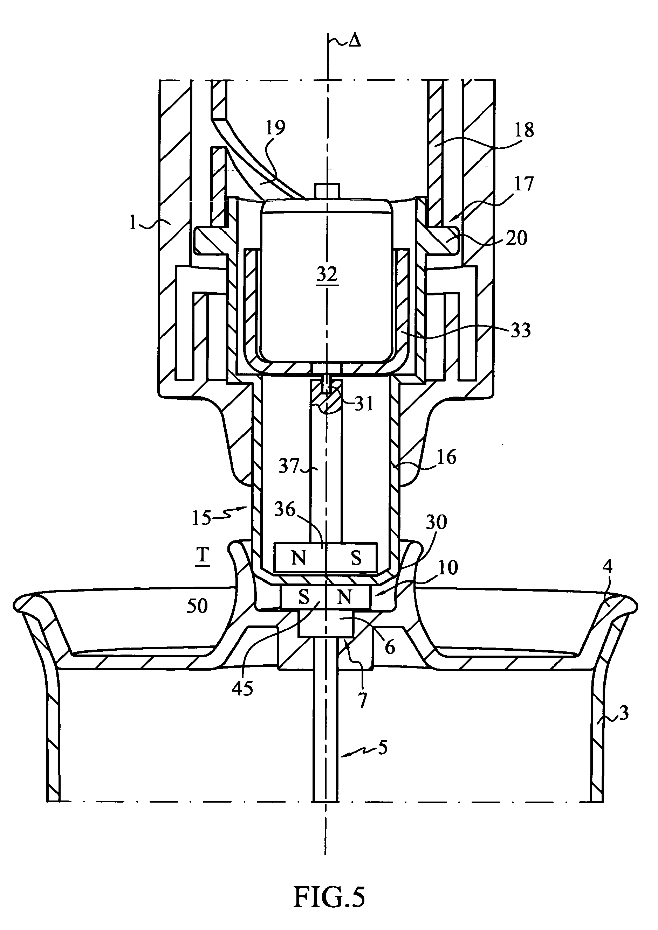

Selon l'exemple illustré en relation avec les figures 1 à 4 et décrit précédemment, la tête d'accouplement 10 et le pied couplage 30 sont conçus pour s'encastrer en partie au moins l'un dans l'autre. Toutefois, un tel mode de réalisation n'est pas strictement nécessaire à l'invention. En effet, la tête d'accouplement 10 et le pied d'accouplement 30 peuvent présenter des formes plates destinées à être simplement placées à proximité immédiate l'une de l'autre comme le montre la figure 5. Selon cette forme de réalisation les moyens de couplage 36, 40 comprennent un aimant permanent 36 solidaire de l'arbre 37 et un aimant permanent 45 solidaire de la tête d'accouplement 10. Les aimants 36 et 40 sont alors disposés de manière que le couplage magnétique se réalise selon une direction principale sensiblement verticale et parallèle à l'axe de rotation Δ. Selon la forme de réalisation illustrée en relation avec la figure 5, le couvercle 4 comprend, en tant que moyens de centrage, une collerette 50 qui entoure la tête d'accouplement 10 en étant coaxiale à cette dernière. La partie inférieure de la tête d'entrainement 15, formant le pied d'accouplement, est alors adaptée pour venir s'engager dans la collerette 50 de manière à assurer un centrage du pied d'accouplement 30 par rapport à la tête d'accouplement 10.

Bien entendu, diverses autres modifications peuvent être apportées à l'invention dans le cadre des revendications annexées.

## Revendications

1. Appareil ménager pour émulsionner un liquide alimentaire comprenant :
- un récipient amovible (3) équipé d'un couvercle, ledit couvercle comprenant un outil rotatif (5) plongeant dans le récipient (3) pour émulsionner le liquide, ledit outil rotatif (5) comprenant une tête d'accouplement (10) pour l'entraînement en rotation de l'outil,
- un châssis (1) supportant un moteur électrique (32) associé à une tête d'entrainement (15) qui est mobile entre une position de repos (R) et une position de travail (T) et qui comprend un pied d'accouplement adapté pour coopérer, en position de travail (T), avec la tête d'accouplement (10) dudit outil rotatif (5) de manière à entrainer en rotation l'outil (5),
**caractérisé en ce que** la tête d'entraînement (15) est mobile en translation verticale entre la position de repos (R) et la position de travail (T) au dessus d'une zone de réception (2) du récipient amovible (3) et **en ce que** la transmission à l'outil (5) du mouvement de rotation du moteur (32) se fait par couplage magnétique au niveau de la tête d'accouplement (10) et du pied d'accouplement (30).

2. Appareil ménager pour émulsionner un liquide alimentaire selon la revendication 1, **caractérisé en ce qu'il** comprend des moyens (35,40, 50) de centrage de la tête d'accouplement (10) par rapport au pied d'accouplement (30).

3. Appareil ménager pour émulsionner un liquide alimentaire selon la revendication 1 ou 2, **caractérisé en ce que** :
- le pied d'accouplement (30) comprend, en tant que moyens de centrage, un manchon borgne (35) à l'intérieur duquel est logé un arbre (37) qui est entrainé par le moteur (32) et qui porte des moyens de couplage magnétique (36) comprenant au moins un aimant permanent,
- la tête d'accouplement (10) comprend une cuvette (40) de réception du manchon (30) qui forme des moyens de centrage, qui est solidaire de l'outil rotatif (5) et qui porte à l'extérieur de la cuvette des moyens de couplage magnétique (41,42) comprenant au moins deux aimants permanents diamétralement opposés par rapport à la cuvette (40).

4. Appareil ménager pour émulsionner un liquide alimentaire selon la revendication 3, **caractérisé en ce que** les aimants permanents (36, 41, 42) possèdent une direction nord-sud sensiblement horizontale de sorte que le couplage magnétique se fait selon une direction principale horizontale.

5. Appareil ménager pour émulsionner un liquide alimentaire selon la revendication 1 ou 2, **caractérisé en ce que** les moyens d'accouplement magnétique comprennent des moyens de couplage dans le pied d'entrainement et dans la tête d'entrainement comprenant des aimants permanents disposés pour que la direction principale de couplage soit sensiblement verticale.

6. Appareil ménager pour émulsionner un liquide selon l'une des revendications précédentes, **caractérisé en ce que** le couvercle comprend en tant que moyens de centrage une collerette qui entoure la tête d'accouplement et qui est destinée à recevoir une partie inférieure de la tête d'entraînement

7. Appareil ménager pour émulsionner un liquide alimentaire selon l'une des revendications précédentes, **caractérisé en ce que** le moteur (32) est situé dans la tête d'entraînement (15) et se déplace avec elle.

8. Appareil ménager pour émulsionner un liquide alimentaire selon l'une des revendications précédentes, **caractérisé en ce qu'il** comprend des moyens (17) de manoeuvre de la tête d'entrainement (15) entre ses positions de repos (R) et de travail (T) qui comprennent un système à rampe hélicoïdale (19) d'axe vertical.

9. Appareil ménager pour émulsionner un liquide alimentaire selon la revendication 8, **caractérisé en ce que** les moyens de manoeuvre (17) comprennent une molette de manoeuvre (21) située sur le dessus du châssis (1).

10. Appareil ménager pour émulsionner un liquide alimentaire selon l'une des revendications précédentes, **caractérisé en ce que** la tête d'entraînement (15) se déplace en partie au moins à l'intérieur du châssis (1).

## Patentansprüche

1. Haushaltsgerät zum Emulgieren eines flüssigen Nahrungsmittels, welches Folgendes umfasst:
- ein abnehmbares Gefäß (3), das mit einem Deckel ausgestattet ist, wobei der genannte Deckel ein in das Gefäß (3) hineinragendes drehbares Werkzeug (5) zum Emulgieren der Flüssigkeit umfasst, wobei das genannte drehbare Werkzeug (5) einen Kupplungskopf (10) umfasst, der das Werkzeug in Drehung versetzt,
- ein Gehäuse (1), das einen Elektromotor (32) trägt, der zu einem Antriebskopf (15) gehört, der zwischen einer Ruhestellung (R) und einer Arbeitsstellung (T) bewegt werden kann und einen Kupplungsfuß umfasst, der dafür ausgelegt ist, in der Arbeitsstellung (T) mit dem Kupplungskopf (10) des genannten drehbaren Werkzeugs (5) derart zusammenwirken, dass das Werkzeug (5) in Drehung versetzt wird,
**dadurch gekennzeichnet, dass** der Antriebskopf (15) zwischen der Ruhestellung (R) und der Arbeitsstellung (T) über einem Aufnahmebereich (2) des abnehmbaren Gefäßes (3) vertikal verschoben werden kann und dass die Übertragung der Drehbewegung des Motors (32) auf das Werkzeug (5) durch die magnetische Kopplung zwischen dem Kupplungskopf (10) und dem Kupplungsfuß (30) erfolgt.

2. Haushaltsgerät zum Emulgieren eines flüssigen Nahrungsmittels nach Anspruch 1, **dadurch gekennzeichnet, dass** es Mittel (35,40, 50) zur Zentrierung des Kupplungskopfes (10) in Bezug auf den Kupplungsfuß (30) umfasst.

3. Haushaltsgerät zum Emulgieren eines flüssigen Nahrungsmittels nach Anspruch 1 oder 2, **dadurch gekennzeichnet, dass**
- der Kupplungsfuß (30) als Mittel zur Zentrierung eine Blindmuffe (35) umfasst, in der sich eine Welle (37) befindet, die von dem Motor (32) angetrieben wird und Mittel zur magnetischen Kopplung (36) mit mindestens einem Dauermagneten trägt,
- der Kupplungskopf (10) eine Vertiefung (40) zur Aufnahme der die Mittel zur Zentrierung bildenden Muffe (35) umfasst, die mit dem drehbaren Werkzeug (5) verbunden ist und außen an der Vertiefung Mittel zur magnetischen Kopplung (41,42) mit mindestens zwei Dauermagneten trägt, die in Bezug auf die Vertiefung (40) diametral gegenüberliegend angeordnet sind.

4. Haushaltsgerät zum Emulgieren eines flüssigen Nahrungsmittels nach Anspruch 3, **dadurch gekennzeichnet, dass** die Dauermagneten (36, 41, 42) eine Nord-Süd-Richtung aufweisen, die im Wesentlichen horizontal verläuft, sodass die magnetische Kopplung in einer horizontalen Hauptrichtung erfolgt.

5. Haushaltsgerät zum Emulgieren eines flüssigen Nahrungsmittels nach Anspruch 1 oder 2, **dadurch gekennzeichnet, dass** die Mittel zur magnetischen Kopplung Kopplungselemente im Antriebsfuß und im Antriebskopf umfassen, die Dauermagneten aufweisen, die so angeordnet sind, dass die Hauptkopplungsrichtung im Wesentlichen vertikal verläuft.

6. Haushaltsgerät zum Emulgieren einer Flüssigkeit nach einem der vorhergehenden Ansprüche, **dadurch gekennzeichnet, dass** der Deckel als Mittel zur Zentrierung einen Kragen aufweist, der den Kupplungskopf umschließt und für die Aufnahme des unteren Teils des Antriebskopfes vorgesehen ist.

7. Haushaltsgerät zum Emulgieren eines flüssigen Nahrungsmittels nach einem der vorhergehenden Ansprüche, **dadurch gekennzeichnet, dass** sich der Motor (32) in dem Antriebskopf (15) befindet und sich mit ihm bewegt.

8. Haushaltsgerät zum Emulgieren eines flüssigen Nahrungsmittels nach einem der vorhergehenden Ansprüche, **dadurch gekennzeichnet, dass** es Mittel (17) zur Betätigung des Antriebskopfes (15) zwischen seiner Ruhestellung (R) und seiner Arbeitsstellung (T) umfasst, die ein Wendelsystem (19) mit vertikaler Achse umfassen.

9. Haushaltsgerät zum Emulgieren eines flüssigen Nahrungsmittels nach Anspruch 8, **dadurch gekennzeichnet, dass** die Betätigungsmittel (17) einen Drehknopf (21) umfassen, der sich auf der Oberseite des Gehäuses (1) befindet.

10. Haushaltsgerät zum Emulgieren eines flüssigen Nahrungsmittels nach einem der vorhergehenden Ansprüche, **dadurch gekennzeichnet, dass** sich der Antriebskopf (15) zumindest teilweise im Innern des Gehäuses (1) bewegt.

## Claims

1. Household appliance to emulsify a food liquid comprising:
- a removable container (3) equipped with a lid, said lid comprising a rotary tool (5) dipping into the container (3) to emulsify the liquid, said rotary tool (5) comprising a coupling head (10) for driving the tool in rotation,
- a frame (1) supporting an electric motor (32) associated with a drive head (15) which is movable between a rest position (R) and a working position (T) and which comprises a coupling foot adapted to cooperate, in working position (T), with the coupling head (10) of said rotary tool (5) so as to drive the tool (5) in rotation,
**characterised in that** the drive head (15) is movable in vertical translation between the rest position (R) and the working position (T) above a receiving area (2) of the removable container (3) and **in that** the transmission to the tool (5) of the rotational movement of the motor (32) is produced by magnetic coupling at the coupling head (10) and the coupling foot (30).

2. Household appliance to emulsify a food liquid according to claim 1, **characterised in that** it comprises means (35, 40, 50) for centring the coupling head (10) relative to the coupling foot (30).

3. Household appliance to emulsify a food liquid according to claim 1 or 2, **characterised in that**:
- the coupling foot (30) comprises, as centring means, a blind sleeve (35) housing a shaft (37) which is driven by the motor (32) and which carries magnetic coupling means (36) comprising at least one permanent magnet,
- the coupling head (10) comprises a cup (40) for receiving the sleeve (30) forming centring means, which is attached to the rotary tool (5) and which carries outside the cup magnetic coupling means (41, 42) comprising at least two permanent magnets diametrically opposed relative to the cup (40).

4. Household appliance to emulsify a food liquid according to claim 3, **characterised in that** the permanent magnets (36, 41, 42) have a substantially horizontal north-south direction so that the magnetic coupling is made according to a main horizontal direction.

5. Household appliance to emulsify a food liquid according to claim 1 or 2, **characterised in that** the magnetic coupling means comprise coupling means in the drive foot and in the drive head comprising permanent magnets arranged so that the main coupling direction is substantially vertical.

6. Household appliance to emulsify a liquid according to one of the preceding claims, **characterised in that** the lid comprises as centring means a collar surrounding the coupling head and which is intended to receive a lower portion of the drive head

7. Household appliance to emulsify a food liquid according to one of the preceding claims, **characterised in that** the motor (32) is located in the drive head (15) and moves with it.

8. Household appliance to emulsify a food liquid according to one of the preceding claims, **characterised in that** it comprises means (17) for manoeuvring the drive head (15) between its rest (R) and working (T) positions which comprise a spiral ramp system (19) with vertical axis.

9. Household appliance to emulsify a food liquid according to claim 8, **characterised in that** the manoeuvring means (17) comprise a manoeuvring wheel (21) located on top of the frame (1).

10. Household appliance to emulsify a food liquid according to one of the preceding claims, **characterised in that** the drive head (15) moves at least partly inside the frame (1).
